Europäisches Patentamt

European Patent Office

Office européen des brevets

(19)

(11) Veröffentlichungsnummer : **0 081 105**
**B1**

(12) **EUROPÄISCHE PATENTSCHRIFT**

(45) Veröffentlichungstag der Patentschrift :
07.05.86

(21) Anmeldenummer : 82110559.0

(22) Anmeldetag : 16.11.82

(51) Int. Cl.⁴ : **H 05 B   7/14**

(54) **Fertigungsstrasse für Graphitnippel mit Vorrichtungen zur Herstellung von Speicherbohrungen und zum Füllen der Bohrungen mit einem Binder.**

(30) Priorität : 03.12.81 DE 3147793

(43) Veröffentlichungstag der Anmeldung :
15.06.83 Patentblatt 83/24

(45) Bekanntmachung des Hinweises auf die Patenterteilung : 07.05.86 Patentblatt 86/19

(84) Benannte Vertragsstaaten :
**FR GB IT SE**

(56) Entgegenhaltungen :
**DE-B- 1 034 788**
**DE-B- 1 057 261**
**DE-B- 2 203 226**
**DE-C-   625 605**
**GB-A-   848 221**
**US-A- 2 510 230**
**US-A- 2 836 294**

(73) Patentinhaber : **SIGRI GmbH**
**Werner-von-Siemens-Strasse 18**
**D-8901 Meitingen (DE)**

(72) Erfinder : **Sigmund, Adolf, Dipl.-Ing. (FH)**
**Egererstrasse 3**
**D-8901 Meitingen 2 (DE)**

## Beschreibung

Gegenstand der Erfindung ist eine Fertigungsstraße zum Herstellen doppelkonischer Gewindenippel aus zylindrischen Graphitabschnitten, durch welche die Graphitabschnitte bewegt, auf Länge geschnitten, mit Speicherbohrungen zur Aufnahme eines thermoplastischen Binders versehen, die Speicherbohrungen mit dem thermoplastischen Binder gefüllt und die Graphitabschnitte abgedreht und mit einem Gewinde versehen werden.

In Lichtbogenöfen beispielsweise zur Erzeugung von Elektrostahl verwendete Graphitelektroden bestehen aus mehreren miteinander verschraubten zylindrischen Graphitabschnitten. Beim Betrieb der Elektroden wird der unterste, einen Ansatzpunkt des Lichtbogens bildende Abschnitt allmählich verbraucht, so daß der gesamte Elektrodenstrang proportional zur Verbrauchsrate gesenkt und von Zeit zu Zeit am Kopf des Strangs ein neuer Abschnitt aufgesetzt werden muß. Die einzelnen Abschnitte sind im allgemeinen mit Gewindenippeln verschraubt, die in eine Ausnehmung oder Schachtel an den Kopfflächen der Abschnitte eingreifen. Die Verbindungen der Abschnitte sind kritische Stellen des Elektrodenstrangs, da durch die mannigfaltigen auf die Verbindung wirkenden Kräfte Lockerungen der Verschraubung oder auch Brüche ausgelöst werden können. Lockerungen bewirken einen größeren Übergangswiderstand und größere Temperaturgradienten in dem Elektrodenstrang, die schließlich ebenfalls den Bruch der Verbindung verursachen. Da in den Ofenherd stürzende Teile des Elektrodenstrangs den spezifischen Elektrodenbedarf erhöhen und zu Störungen des Ofenbetriebs führen, hat es nicht an Versuchen gefehlt, die Festigkeit der Verbindungen in einem Elektrodenstrang zu verbessern und eine permanente Verbindung zwischen den Teilen eines Elektrodenstrangs zu schaffen.

Permanente Verbindungen bestehen häufig aus Koksbrücken, die zwischen den Oberflächen von Schachtel und Nippel oder auch zwischen den aneinanderliegenden Stirnflächen der Elektrodenabschnitte gebildet sind. Zur Herstellung derartiger Koksbrücken versieht man Nippel oder Elektrodenabschnitte mit einem oder mehreren mit der Oberfläche dieser Teile in Verbindung stehenden Speicherräumen und füllt die Speicher mit einem bei höherer Temperatur schmelzenden oder erweichenden carbonisierbaren Binder. Vorzugsweise verwendet man thermoplastische Binder, z. B. Steinkohlenteerpeche. Steigt nun die Temperatur der Elektrode bei ihrem Einsatz in einem Lichtbogenofen über den Erweichungspunkt des Binders, fließt ein Teil aus dem Speicherraum und füllt wenigstens teilweise den freien Raum zwischen den Elementen der Verbindung oder den Elektrodenabschnitten. Mit weiter steigender Temperatur pyrolysiert der Binder und es werden temperaturbeständige Koksbrücken gebildet. Es sind sehr verschiedene Anordnungen und Ausbildungen der Speicherräume bekannt geworden, z. B. durch die US-A-2 510 230 in den Schachtelboden oder die Nippelstirnfläche eingelassene mit Pech gefüllte Speicherräume oder durch die US-A-2 894 776 Speicherräume in den Stirnflächen der Elektrodenabschnitte. Die permanente Verbindung erstreckt sich bei diesen Ausführungen nicht oder nur geringfügig auf das Schraubgewinde, das in einer Ausführungsform der US-A-2 510 230 und nach der Lehre der US-A-2 836 294 als Kittfläche einbezogen ist. Die im Nippel angeordneten Speicherräume bestehen dabei aus zylindrischen Kanälen oder Bohrungen, die sich im wesentlichen quer zur Längsachse des Nippels erstrecken.

Zur Füllung der Speicherräume sind im wesentlichen zwei Verfahren bekanntgeworden, 1. der Speicher wird mit dem geschmolzenen Binder ausgegossen oder 2. aus dem Binder bestehende vorgeformte Körper werden in den Speicher eingelegt (US-A-2 836 294). Das erstgenannte Verfahren ist besonders einfach, da keine Formwerkzeuge nötig sind und der flüssige Binder sich jeder Speicherform anpaßt. Es ist lediglich erforderlich, den Binder vor dem Gießen auf eine Temperatur von etwa 30 bis 80 °C über seinen Erweichungspunkt zu erhitzen. Nachteilig sind andererseits die von heißen Bindern, z. B. Pechen, entwickelten Dämpfe, die gesundheitsschädliche Stoffe enthalten können.

Der Erfindung liegt daher die Aufgabe zugrunde, die Herstellung zylindrischer Speicherräume in Nippeln und die Füllung der Speicherräume mit einem thermoplastischen Binder als Stationen einer automatischen Fertigstraße für Nippel auszubilden, in welcher Graphitabschnitte auf Länge geschnitten, die abgelängten Abschnitte zu Doppelkegeln abgedreht und in die Konusflächen Gewinde gefräst werden. Eine Schädigung oder Belästigung der Umwelt durch Binderdämpfe soll dabei ausgeschlossen sein und die Binderfüllung der Speicherräume derart haften, daß der bei Raumtemperatur spröde Binder in den auf den Füllvorgang folgenden Bearbeitungsstufen nicht aus den Speicherräumen ausbricht.

Die Aufgabe wird gelöst mit einer Fertigungsstraße der eingangs genannten Art mit einer Rundtaktmaschine mit vier Stationen und einem mit vorgegebener Periode drehbaren Rundtisch, vier mit dem Rundtisch starr verbundene zur Aufnahme jeweils eines der auf Länge geschnittenen Graphitabschnitte dienenden, durch je einen in radialer Richtung verschiebbaren Anschlag begrenzten prismatischen Führungen, einer der ersten Station zugeordneten periodisch in radialer Richtung wirkenden Schubstange für den jeweiligen Graphitabschnitt, vier am Rundtisch angelenkten und im Bereich der zweiten und dritten Station auf die in den Führungen gelagerten Graphitabschnitte wirkenden Klemmhebeln, einem oberhalb der zweiten Station angeordneten, wenigstens zwei relativ zueinander bewegbare Spindeln aufweisenden in vertikaler Richtung verschiebbaren Bohrwerk zum Bohren von Sacklöchern in die Graphitabschnitte, wenigstens zwei oberhalb der dritten Station angeordneten, durch beheizbare Rohrleitungen über je eine regelbare Dosierpumpe mit einem beheizbaren Bindervorratsbehälter verbundenen, gegeneinander in vertikaler Richtung verschiebbaren Füllstutzen zum Füllen der Sacklöcher mit dem Binder, einer periodisch in die vierte Station eingreifenden und in radialer Richtung bewegten Zugstange für den jeweiligen Graphitabschnitt, und eine in Fertigungsrichtung nach dem Rundtisch angeordnete Drehmaschine zum Freischneiden der bindergefüllten Sacklöcher.

Die Fertigungsstraße ist durch Zeichnungen beispielhaft erläutert. Es zeigen

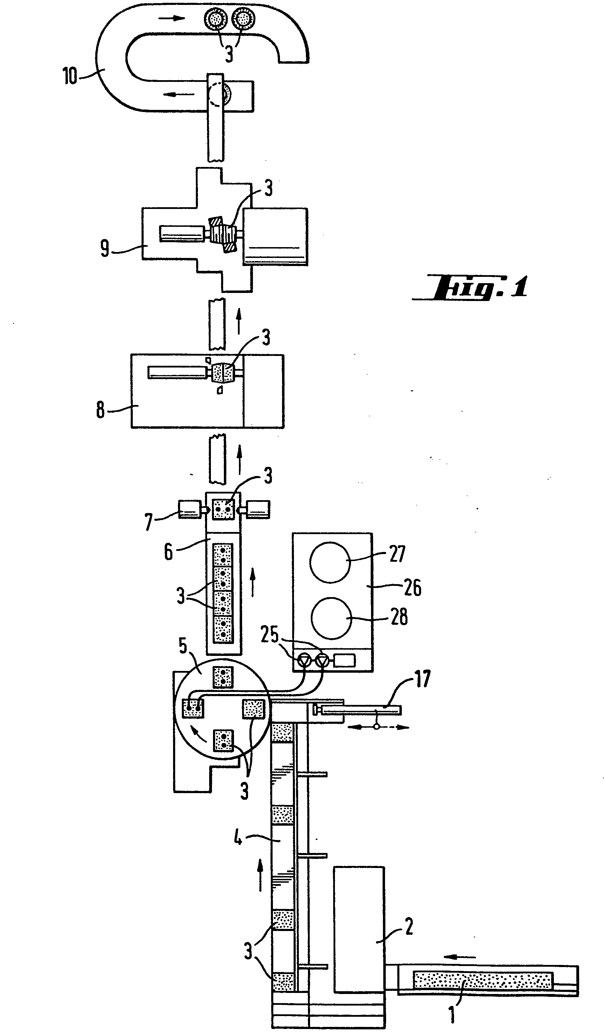

Figur 1 eine schematische Darstellung der Fertigungsstraße zum Herstellen doppelkonischer Nippel,

Figur 2 einen Aufriß des Rundtischs,

Figur 3 einen Schnitt nach der Linie III-III in Fig. 2

Figur 4 einen Schnitt nach der Linie IV-IV in Fig. 2

Die von einem zeichnerisch nicht dargestellten Transportsystem, beispielsweise einem Kettenband zur Fertigungsstraße bewegte Graphitstange 1 wird mittels der Säge 2 in Abschnitte 3 zerlegt, die auf dem Transportband 4 zum Rundtisch 5 bewegt, auf dem Tisch fixiert und mit Sacklochbohrungen versehen werden. Nach Füllung der Bohrungen mit einem Binder werden die Graphitabschnitte 3 auf der als Kühlstrecke ausgebildeten Rollenbahn 6 zu der Zentrierstation 7 gefördert, mit Zentrierungen versehen und auf der Drehmaschine 8 konisch gedreht. Auf der Fräsmaschine 9 werden die Graphitabschnitte mit einem Gewinde versehen und dann auf dem Plattenband 10 zu einem zeichnerisch nicht dargestellten Inspektionsplatz gefördert. Die beweglichen Teile der Fertigungsstraße sind in bekannter Weise untereinander verkettet und die Arbeitstakte der einzelnen Stationen aufeinander abgestimmt.

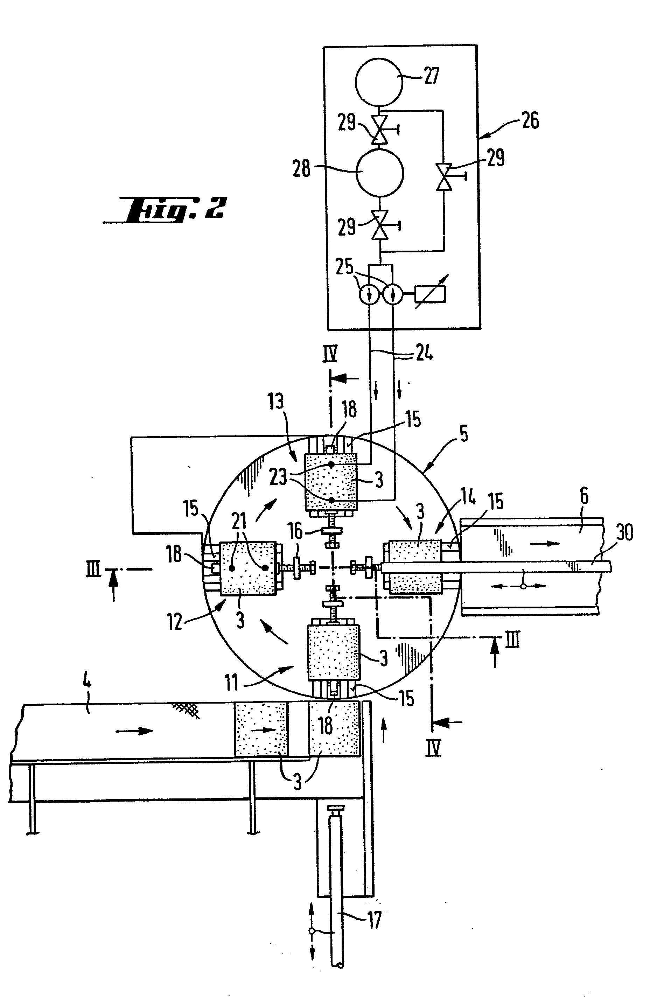

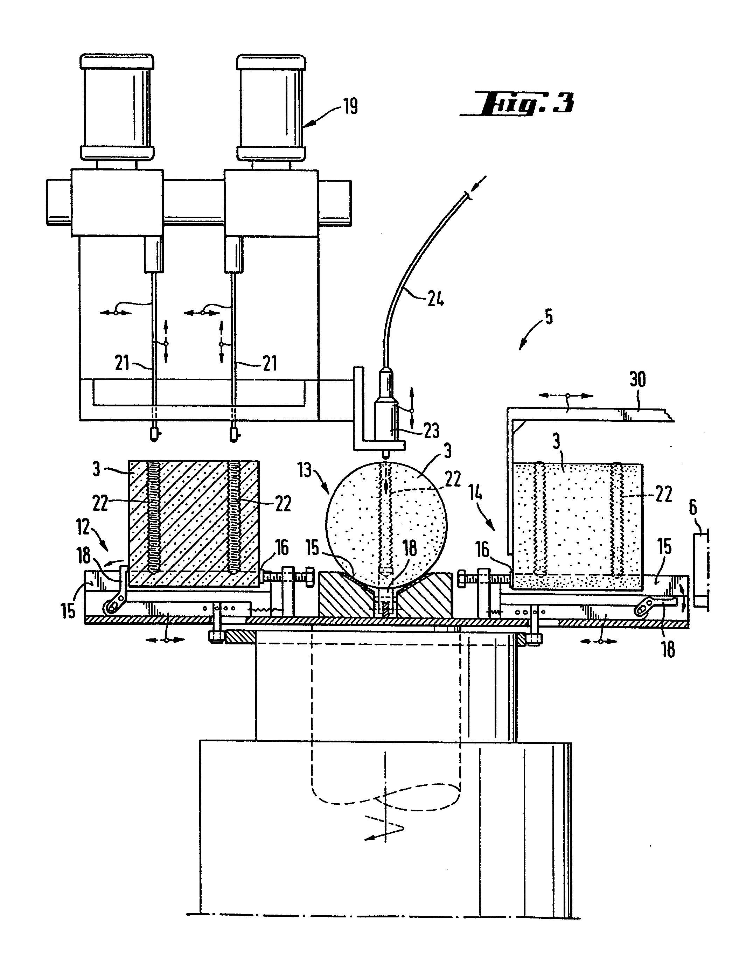

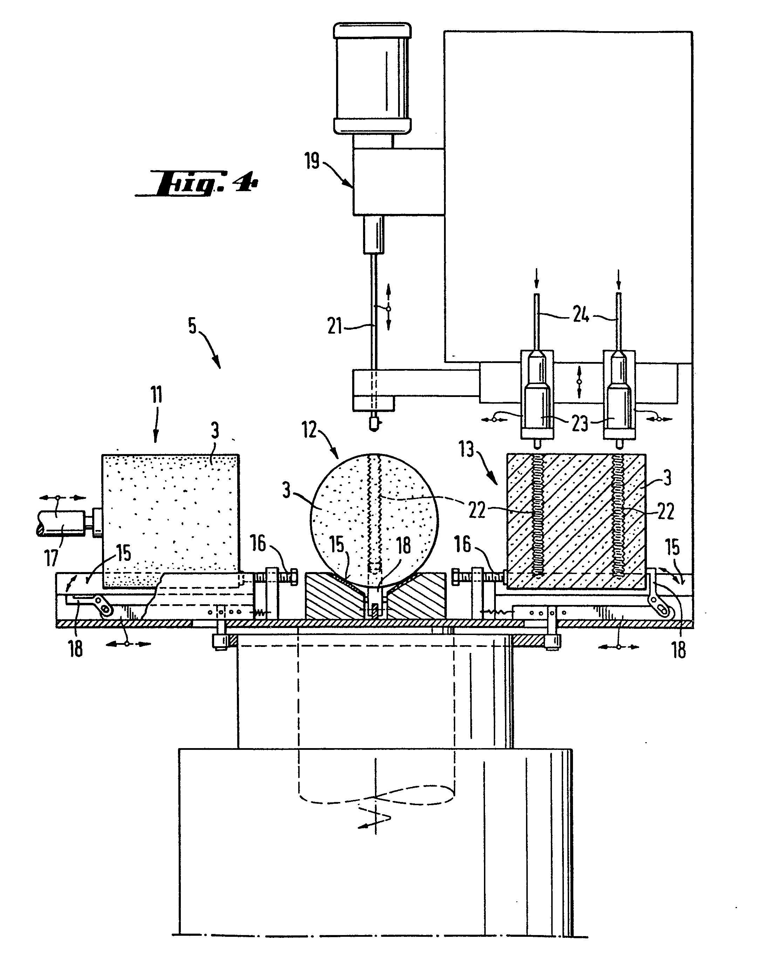

Die Rundtaktmaschine weist Stationen 11, 12, 13 und 14 auf und einen um eine vertikale Achse in Schritten von 90° drehbaren Rundtisch 5 (Fig. 2 bis 4) mit vier prismatischen Führungen, die je mit einem in radialer Richtung verstellbaren Anschlag 16 versehen sind. Der Station 11 ist die Schubstange 17 zugeordnet, durch die periodisch Graphitabschnitte 3 vom Band 4 auf die Führung 15 und gegen den Anschlag 16 geschoben werden. Die Schubstange 17 fährt in die Ausgangslage zurück und der Rundtisch dreht sich gleichzeitig um 90°, wobei der Graphitabschnitt in die Position 12 gelangt. Bei der Drehung wird über eine zeichnerisch nicht dargestellte Kurvenscheibe der an dem Rundtisch angelenkte Klemmhebel 18 gegen die Stirnfläche des Graphitabschnitts gepreßt, der dadurch fest fixiert ist. Oberhalb der Station 12 ist das Bohrwerk 19 mit den Spindeln 21 angeordnet. Das Bohrwerk ist in vertikaler Richtung, die Bohrspindeln gegeneinander verschiebbar. Zweck des Bohrwerks ist die Schaffung von im wesentlichen quer zur Längsachse des Graphitabschnitts verlaufenden Speicherräumen zur Aufnahme eines Binders. Da beispielsweise Pechbinder Graphit bei Raumtemperatur nicht benetzen, sind Bohrungen mit einer glatten Wand als Speicher nicht geeignet. Zur Herstellung einer geeigneten Oberflächenstruktur weisen die Bohrspindeln daher eine zahnartige Erweiterung auf. Beim Bohren mit einem Vorschub von etwa 2 mm/Umdrehung erhält man auf der Mantelfläche des Zylinders eine vertiefte Spirale, die einen vorzüglichen Ankergrund für den Binder bildet. Für die Haftung des Binders ist ebenfalls das in der Bohrung verbliebene Bohrmehl störend. Zweckmäßig werden daher die Bohrungen mit einem Druckgas, z. B. Druckluft ausgeblasen, das vorteilhaft über den Bohrer selbst zugeführt wird. Nach einer anderen vorteilhaften Ausführung wird das Bohrwerk vor dem Ziehen der Spindeln stillgesetzt. Eine Beschädigung der spiraligen Vertiefung der Bohrungsfläche wird dadurch vermieden, es bildet sich beim Ziehen nur eine im wesentlichen vertikal verlaufende Rille.

Nach Fertigstellung der Sackbohrungen 22 und Entfernung der Bohrspindeln 21 aus den Bohrungen wird der Rundtisch um weitere 90° in Uhrzeigerrichtung gedreht und der Graphitabschnitt gelangt in die Position 13. Oberhalb der Station sind zwei in vertikaler Richtung und gegeneinander verschiebbare Füllstutzen 23 angeordnet, die über flexible, thermisch isolierte und beheizbare Rohrleitungen 24 und je eine Dosierpumpe 25 mit dem beheizbaren Bindervorratsbehälter 26 verbunden sind. Der Vorratsbehälter besteht zweckmäßig aus einem Teil 27, in dem der Binder aufgeschmolzen und einem Teil 28, in dem der geschmolzene Binder auf Temperatur gehalten wird. Zwischen den Teilen des Vorratsbehälters und den Dosierpumpen sind in bekannter Weise Ventile 29 angeordnet.

Als Binder eignen sich besonders Steinkohlenteerpeche mit einem Erweichungspunkt von etwa 80 bis 100 °C, die beim Erhitzen einen möglichst großen Verkokungsrückstand ergeben. Derartige Peche enthalten größere Anteile koagulierender hochmolekularer Harze, die sich in den Dosierpumpen ablagern und deren Funktionsfähigkeit beeinträchtigen können. Der Fehler wirkt sich bei dem intermittierenden Betrieb der Pumpen besonders beim Dosieren kleiner Mengen ungünstig aus. Nach einer bevorzugten Ausbildung der Erfindung sind deshalb ventillose Kolbenpumpen als Dosierpumpen vorgesehen, deren Funktion durch die Harzanteile im Pech nicht gestört wird. Das Volumen der Sacklochbohrungen ist eine Funktion des Durchmessers des Graphitabschnitts und beträgt etwa 10 bis 200 cm$^3$. Die entsprechenden Fördermengen der Pumpen werden zweckmäßig durch Änderungen der Drehzahl und des Hubs geregelt. Die abgefüllte Pechmenge schrumpft beim Abkühlen so stark, daß unterhalb der Bohrungsöffnung ein trichterförmiger Leerraum gebildet wird. Die fehlende Bindermenge wird nach einer bevorzugten Ausführung der Erfindung wenigstens zu einem Teil durch Nachdosieren kurz vor dem Ende der Taktzeit zugesetzt. Die nachzufüllende Menge ist eine Funktion der gesamten Bindermenge und wird wie oben beschrieben durch eine Drehzahländerung der Dosierpumpe eingestellt.

Nach Füllung der Bohrungen 22 mit einem Binder wird der Rundtisch um weitere 90° in Uhrzeigerrichtung gedreht und der Graphitabschnitt gelangt in die Position 14. Bei dieser Drehung klappt der Klemmhebel 18 nach unten und gibt den Graphitabschnitt frei, der mittels der periodisch eingreifenden Zugstange 30 von der Station 14 auf die Rollenbahn 6 gezogen wird. Der Rundtisch nimmt nach einer weiteren Drehung um 90° in Uhrzeigerrichtung wieder die Ausgangsposition ein und das Spiel beginnt von neuem.

Zur Anpassung an die verschiedenen Durchmesser und Längen der Graphitabschnitte sind der Anschlag 16, die Bohrspindeln 21 und die Füllstutzen 23 verschiebbar angeordnet. Nach Einstellung dieser Parameter und der Dosier- und Nachdosiermenge der Dosierpumpen wird die Fertigungsstraße in Betrieb gesetzt. Da die Graphitabschnitte bedingt durch die vorhergehende Pyrolyse und Graphitierung einen mehr oder weniger großen elliptischen Querschnitt und eine wellige Mantelfläche aufweisen, ist die Führung und die Fixierung der Abschnitte besonders wichtig. Die erfindungsgemäß vorgesehene Prismenführung und die Einspannmittel ermöglichen eine eindeutige und bleibende Fixierung der Graphitabschnitte während der Bohr- und Fülloperation. Die Fixierung der Abschnitte mit dem Klemmhebel 18 und die Teilgenauigkeit des Rundtischs 5 gewährleisten insbesondere, daß die Füllstutzen 23 genau über dem Zentrum des Sacklochs 22 positioniert wird und somit eine störungsfreie Füllung der Speicherräume möglich ist. Durch die besondere Ausführung der zum Bohren der Sacklöcher verwendeten Bohrer wird die Bohrungsfläche derart strukturiert, daß die Binderfüllung trotz der schlechten Haftung dieses Materials nicht aus den Bohrungen fällt. Die in der Regel als Binder verwendeten Peche weisen einige, jede automatische Dosierung erschwerende Stoffeigenschaften auf, z. B. die starken Änderungen der Viskosität mit der Temperatur und die Koagulation der hochmolekularen Harzanteile und schließlich die starke Schrumpfung beim Erstarren. Die stoffbedingten Schwierigkeiten werden behoben durch die Dosierung des Binders mit ventillosen Dosierpumpen und Nachdosieren am Ende der Taktzeit.

Die mit Binder gefüllten Speicherbohrungen der vom Rundtisch 5 abgezogenen Graphitabschnitte 3 sind nur einseitig zugänglich. Der zweite Zugang wird auf der Drehmaschine 8 geschaffen, auf der die Graphitabschnitte konisch gedreht und dabei die Sacklöcher 22 freigeschnitten werden. Beim Erhitzen des Nippels, beispielsweise bei seiner Verwendung als Verbindungselement in einem Elektrodenstrang, tritt der Binder entsprechend an jeweils zwei gegenüberliegenden Stellen des Nippels aus, fließt in die Freiräume des Gewindes und bildet schließlich eine feste und gleichmäßige Verbindung zwischen Nippel und Elektrodenschachtel.

**Patentansprüche**

1. Fertigungsstraße zum Herstellen doppelkonischer Gewindenippel aus zylindrischen Graphitabschnitten, durch welche die Graphitabschnitte (3) bewegt, auf Länge geschnitten (durch 2), mit Speicherbohrungen (22) zur Aufnahme eines thermoplastischen Binders versehen (in 12), die Speicherbohrungen mit dem thermoplastischen Binder gefüllt (in 13) und die Graphitabschnitte abgedreht (in 8) und mit einem Gewinde versehen werden (in 9), gekennzeichnet durch eine Rundtaktmaschine mit vier Stationen (11-14), und einem mit vorgegebener Periode drehbaren Rundtisch (5), vier mit dem Rundtisch starr verbundene zur Aufnahme jeweils eines der auf Länge geschnittenen Graphitabschnitte dienenden, durch je einen in radialer Richtung verschiebbaren Anschlag (16) begrenzten prismatischen Führungen (15), einer der ersten Station (11) zugeordneten periodisch in radialer Richtung wirkenden Schubstange (17) für den jeweiligen Graphitabschnitt, vier am Rundtisch angelenkten und im Bereich der zweiten und dritten Station (12, 13) auf die in den Führungen gelagerten Graphitabschnitte wirkenden Klemmhebeln (18), einem oberhalb der zweiten Station (12) angeordneten, wenigstens zwei relativ zueinander bewegbare Spindeln (21) aufweisenden in vertikaler Richtung verschiebbaren Bohrwerk (19) zum Bohren von Sacklöchern (22) in die Graphitabschnitte, wenigstens zwei oberhalb der dritten Station (13) angeordneten, durch beheizbare Rohrleitungen (24) über je eine regelbare Dosierpumpe (25) mit einem beheizbaren Bindervorratsbehälter (26) verbundenen, gegeneinander und in vertikaler Richtung verschiebbaren Füllstutzen (23) zum Füllen der Sacklöcher mit dem Binder, einer periodisch in die vierte Station (14) eingreifenden und in radialer Richtung bewegten Zugstange (30) für den jeweiligen Graphitabschnitt, und eine in Fertigungsrichtung nach dem Rundtisch angeordnete Drehmaschine (8) zum Freischneiden der bindergefüllten Sacklöcher.

2. Fertigungsstraße nach Patentanspruch 1, dadurch gekennzeichnet, daß die Bohrspindeln (21) eine zahnartige Schneide aufweisen.

3. Fertigungsstraße nach Patentanspruch 1 oder 2, dadurch gekennzeichnet, daß die Bohrspindeln (21) rohrförmig ausgebildet und mit einem Druckgasspeicher verbunden sind.

4. Fertigungsstraße nach einem der Patentansprüche 1 bis 3, dadurch gekennzeichnet, daß die Dosierpumpen (25) ventillose Kolbenpumpen sind.

5. Verfahren zum Herstellen doppelkonischer Gewindenippel auf der Fertigungsstraße nach Patentanspruch 2, ggf. 3 oder 4, dadurch gekennzeichnet, daß die Spindeln (21) nach dem Bohren stillgesetzt und dann aus den Sackbohrungen (22) gezogen werden.

6. Verfahren nach Patentanspruch 5, dadurch gekennzeichnet, daß nach dem Erkalten des in die Sackbohrungen (22) gefüllten Binders der Schwindungsverlust nachgefüllt wird.

## Claims

1. Production line for the manufacturing of double tapered threaded nipples from cylindrical graphite segments, by means of which the graphite segments (3) are moved, are cut to length (by 2), are provided with storage drill holes (22) for uptake of a thermoplastic binder (in 12), the storage drill holes are filled with the thermoplastic binder (in 13) and the graphite segments are turned off (in 8) and are provided with a thread (in 9), characterised by a rotary cycle machine with four stations (11-14) and a round table (5) turnable with predetermined period, four prismatic guides (15) each limited by means of a boss (16) displaceable in the radial direction, serving with the rigidly connected round table for the uptake of one of the graphite segments cut to length, a push rod (17) for the particular graphite segment acting periodically in the radial direction arranged at the first station (11), four clamping levers (18) pivoted to the round table and acting in the region of the second and third stations (12, 13) on the graphite segments located in the guides, a drilling arrangement (19) displaceable in the vertical direction for drilling of blind bores (22) in the graphite segments, arranged above the second station (12), possessing at least two shafts (21) displaceable relative to one another, at least two filler manifolds arranged above the third station (13), displaceable opposite to one another and in the vertical direction (23) for the filling of the blind bores with the binder connected by means of heatable conduits (24) through a controllable metering pump (25) with a heatable binder storage container (26), a tie rod (30) for the particular graphite segment engaging the fourth station periodically and moved in the radial direction, and a turning machine (8) arranged in the transfer direction after the round table for the cutting free of the binder filled blind bores.

2. Production line according to claim 1, characterised in that the drill shafts (21) possess a toothed cutting edge.

3. Production line according to claim 1 or 2, characterised in that the drilling shafts (21) are tubularly formed and are connected with a compressed gas container.

4. Production line according to one of claims 1 to 3, characterised in that the metering pumps (25) are valveless piston pumps.

5. Process for the production of double conical threaded nipples on the transfer line according to claim 2, optionally 3 or 4, characterised in that the shafts (21) are shut down after the drilling and then withdrawn from the blind bores (22).

6. Process according to claim 5, characterised in that, after the cooling of the binder filled in the blind bores (22), the shrinkage loss is filled up.

## Revendications

1. Chaîne de production pour la fabrication de raccords filetés doublement coniques à partir de tronçons cylindriques en graphite, chaîne à travers laquelle les tronçons en graphite (3) sont déplacés, coupés en longueur (en deux) munis (en 12) de perçages de réserve (22) destinés à recevoir un liant thermoplastique, ces perçages de réserve étant remplis (en 13) avec le liant thermoplastique, et les tronçons en graphite étant usinés par tournage (en 8) et munis (en 9) d'un filetage, chaîne de production caractérisée en ce qu'elle comporte une machine ronde cadencée avec quatre postes (11 à 14), et une table ronde (5) susceptible de tourner avec une période prédéfinie, tandis qu'il est prévu quatre guidages prismatiques (15) limités chacun par une butée (16) susceptible d'être déplacée en direction radiale et solidaires de la table ronde pour recevoir respectivement un des tronçons en graphite coupé en longueur, une tige de poussée (17) associée au premier poste (11) et agissant périodiquement en direction radiale pour le tronçon en graphite considéré, quatre leviers de serrage (18), articulés sur la table ronde, et agissant dans la zone du deuxième et du troisième postes (12, 13) sur les tronçons en graphite placés sur les guidages, un équipement de perçages (19) susceptible d'être déplacé en direction verticale et comportant au moins deux broches (21) susceptibles d'être déplacées l'une par rapport à l'autre pour percer des trous borgnes (22) dans les tronçons en graphite, au moins deux ajustages de remplissage (23) susceptibles d'être déplacés l'un par rapport à l'autre et en direction verticale, disposés au-dessus du troisième poste (13) et reliés par des canalisations tubulaires susceptibles d'être chauffées (24) et par l'intermédiaire chacun d'une pompe de dosage réglable (25) à un réservoir de liant susceptible d'être chauffé (26), pour remplir les trous borgnes avec le liant, une tige de traction (30) venant périodiquement en prise sur le quatrième poste (14) et déplacée en direction radiale, pour le tronçon en graphite considéré, et un tour (8) disposé dans la direction de finition après la table ronde pour dégager les trous borgnes remplis de liant.

2. Chaîne de production selon la revendication 1, caractérisée en ce que les broches de perçage (21) comportent un tranchant en forme de dent.

3. Chaîne de production selon la revendication 1 ou 2, caractérisée en ce que les broches de perçage (21) sont de forme tubulaire et sont reliées à une réserve de gaz sous pression.

4. Chaîne de production selon une des revendications 1 à 3, caractérisée en ce que les pompes de dosage (25) sont des pompes à piston sans soupape.

5. Procédé pour fabriquer des raccords filetés doublement coniques sur la ligne de production selon la revendication 2 et éventuellement les revendications 3 ou 4, procédé caractérisé en ce que les broches de perçage (21) sont mises à l'arrêt après le perçage et ensuite retirées des perçages borgnes (22).

6. Procédé selon la revendication 5, caractérisé en ce qu'après le refroidissement du liant introduit dans les perçages borgnes (22), la perte par retrait est compensée.

Fig. 1

Fig. 2

Fig.3

Fig. 4